# EUROPÄISCHE PATENTSCHRIFT

(11) **EP 3 093 305 B1**
(45) Veröffentlichungstag und Bekanntmachung des Hinweises auf die Patenterteilung: **30.08.2017**
(21) Anmeldenummer: 15167428.0
(22) Anmeldetag: 12.05.2015
(51) Int. Cl.: C04B 35/626, C04B 35/653, C04B 35/14, C04B 35/043, C04B 35/103, C04B 35/48, C04B 35/632, C04B 35/66, C04B 35/634

(54) **VERSATZ ZUR HERSTELLUNG EINES GRÜNKÖRPERS ZUR HERSTELLUNG EINES FEUERFESTEN KOHLENSTOFFGEBUNDENEN ERZEUGNISSES, VERFAHREN ZUR HERSTELLUNG EINES SOLCHEN GRÜNKÖRPERS SOWIE EIN HIERDURCH HERGESTELLTER GRÜNKÖRPER**
BATCH FOR PRODUCING A GREEN BODY FOR PRODUCING A REFRACTORY CARBON-BONDED PRODUCT, METHOD FOR PRODUCING SUCH A GREEN BODY AND A GREEN BODY OBTAINED THROUGH THIS METHOD
DÉPORT POUR LA FABRICATION D'UNE CORPS VERT DESTINÉ À LA PRODUCTION D'UN PRODUIT RÉFRACTAIRE LIÉ PAR DU CARBONE, PROCÉDÉ DE PRODUCTION D'UN TEL CORPS VERT ET CORPS AINSI PRODUIT

(43) Veröffentlichungstag der Anmeldung: 16.11.2016
(73) Patentinhaber: Refractory Intellectual Property GmbH & Co. KG, 1100 Wien (AT)
(72) Erfinder: Puchleitner, Rainer, 8010 Graz (AT); Riess, Gisbert, 8700 Leoben (AT); Kern, Wolfgang, 8055 Selersberg (AT); Deutsch, Günter, 8774 Mautern (AT); Heid, Stefan, 8700 Leoben (AT); Michelitsch, Andreas, 8062 Kumberg (AT); Köhler, Joachim, 8700 Leoben (AT)
(74) Vertreter: Schweiger, Johannes

(56) Entgegenhaltungen:
- EP-A1- 2 537 873
- WO-A1-97/05172
- WO-A1-2007/111607
- S. ALESSI, ET AL: "Ionizing radiation induced curing of epoxy resin for advanced composite martices", NUCLEAR INSTRUMENTS AND METHODS IN PHYSICS RESEARCH B 236 (2005), 23. Mai 2005 (2005-05-23), Seiten 55-60, XP002742055, Italy
- VINCENT J. LOPATA, ET AL: "Electron-beam-curable epoxy resins for the manufacture of high-performance composites", RADIATION PHYSICS AND CHEMISTRY, Bd. 56, 1. Januar 1999 (1999-01-01), Seiten 405-415, XP002742056, Canada

## Beschreibung

Die Erfindung betrifft einen Versatz zur Herstellung eines Grünkörpers zur Herstellung eines feuerfesten kohlenstoffgebundenen Erzeugnisses, ein Verfahren zur Herstellung eines solchen Grünkörpers sowie ein durch ein solches Verfahren hergestellten Grünkörper.

Der Begriff "feuerfestes Erzeugnis" im Sinne der Erfindung bezeichnet insbesondere feuerfeste keramische Erzeugnisse mit einer Einsatztemperatur von über 600°C und bevorzugt feuerfeste Werkstoffe gemäß DIN 51060, also Werkstoffe mit einem Kegelfallpunkt größer SK17. Die Ermittlung des Kegelfallpunktes kann insbesondere gemäß DIN EN 993-12 erfolgen.

Ein Versatz bezeichnet bekanntermaßen eine Zusammensetzung aus einer oder mehreren Komponenten, durch die mittels einer Temperaturbehandlung, also insbesondere mittels eines Brandes, ein feuerfestes Erzeugnis herstellbar ist.

Feuerfeste Erzeugnisse sind auch in Form von feuerfesten kohlenstoffgebundenen Erzeugnissen bekannt. In solch feuerfesten kohlenstoffgebundenen Erzeugnissen herrscht eine Kohlenstoffbindung vor, über die die feuerfesten Grundstoffe des Erzeugnisses miteinander verbunden sind.

Feuerfeste kohlenstoffgebundene Erzeugnisse werden aus Versätzen hergestellt, die wenigstens einen feuerfesten Grundstoff sowie wenigstens einen Kohlenstoffträger als Komponenten umfassen. Bei einer Temperaturbeaufschlagung eines solchen Versatzes bildet der Kohlenstoff der Kohlenstoffträger eine Kohlenstoffbindung aus, über die die feuerfesten Grundstoffe miteinander verbunden werden.

Die wesentlichen Komponenten eines Versatzes zur Herstellung eines feuerfesten kohlenstoffgebundenen Erzeugnisses sind neben wenigstens einem feuerfesten Grundstoff und dem wenigstens einen Kohlenstoffträger ferner wenigstens ein Binder, der dem geformten, ungebrannten Versatz eine ausreichende Festigkeit verleiht. Daneben kann der Versatz weitere Komponenten umfassen, beispielsweise Antioxidantien in Form von Metallpulvern aus Aluminium oder Silicium, um eine Oxidation des Kohlenstoffs zu unterdrücken.

Über einen Binder gebundene, geformte, ungebrannte Versätze werden auch als Grünkörper bezeichnet. Die Kohlenstoffbindung zur Ausbildung des feuerfesten kohlenstoffgebundenen Erzeugnisses aus einem solchen Grünkörper bildet sich in der Regel erst im Betriebseinsatz dieses Grünkörpers bei den dort herrschenden Temperaturen aus.

Als Binder für Versätze zur Herstellung von Grünkörpern, aus denen mittels Temperaturbeaufschlagung anschließend ein feuerfestes kohlenstoffgebundenes Erzeugnis herstellbar ist, wird insbesondere auch Kunstharz verwendet, insbesondere beispielsweise in Form von Novolaken. Da Novolake bei Raumtemperatur fest sind, kann die Verwendung von Novolaken als Binder auf zwei Arten erfolgen: Zum einen in gelöster Form, wobei insbesondere organische Lösungsmittel zur Anwendung kommen, oder in Pulverform als sogenanntes Pulverharz. Möglich ist auch ein Aufschmelzen des Novolaks bei Temperaturen im Bereich von 70°C und 100°C und die Bearbeitung des mit dem aufgeschmolzenen Novolak angemachten Versatzes im Heißbetrieb.

Die Handhabung solch in organischen Lösungsmitteln gelösten Novolaken ist nicht unproblematisch, da zahlreiche der verwendeten Lösungsmittel beispielsweise gesundheitsgefährdend sind. Soweit Novolak als Pulverharz verwendet wird, lässt sich durch Verwendung allein eines solchen Pulverharzes in der Regel keine ausreichende Grünstandfestigkeit erreichen. Besonders schwierig ist schließlich auch die Verwendung von Novolak im Heißbetrieb, dass das sich vernetzende Harz sowohl im Grünkörper als auch in den zum Aufschmelzen verwendeten Aggregaten in der Regel nur schwer zu handhaben ist.

Der Erfindung liegt die Aufgabe zugrunde, einen Versatz zur Herstellung eines Grünkörpers zur Herstellung eines feuerfesten kohlenstoffgebundenen Erzeugnisses herzustellen, durch welchen ein solcher Grünkörper besonders einfach herzustellen ist. Insbesondere soll der Versatz derart konfektioniert sein, dass dieser einen Binder aufweist, der dem Körper eine gute Grünstandfestigkeit verleiht. Ferner soll der Versatz beziehungsweise der Binder des Versatzes sehr einfach zu handhaben sein, insbesondere auch in den für eine Verarbeitung des Versatzes verwendeten Aggregaten. Ferner soll der für den Versatz verwendete Binder möglichst frei von gesundheitsgefährdenden Substanzen sein.

Eine weitere Aufgabe der Erfindung besteht darin, ein Verfahren zur Herstellung eines Grünkörpers aus einem solchen Versatz zur Verfügung zu stellen.

Eine weitere Aufgabe der Erfindung besteht darin, einen durch ein solches Verfahren herstellbaren Grünkörper zur Verfügung zu stellen.

Zur Lösung der Aufgabe wird erfindungsgemäß zur Verfügung gestellt ein Versatz zur Herstellung eines Grünkörpers zur Herstellung eines feuerfesten kohlenstoffgebundenen Erzeugnisses, welcher die folgenden Komponenten umfasst:
Wenigstens einen feuerfesten Grundstoff;
wenigstens einen Kohlenstoffträger; sowie
wenigstens einen Binder, der ein Harz sowie wenigstens einen Initiator, welcher durch ionisierende Strahlung eine Härtungsreaktion des Harzes initiiert, umfasst.

Überraschend wurde erfindungsgemäß festgestellt, dass die vorgenannten Aufgaben durch einen solchen, erfindungsgemäßen Versatz gelöst werden können. Dabei wurde überraschend festgestellt, dass aus einem erfindungsgemäßen Versatz ein Grünkörper zur Herstellung eines feuerfesten kohlenstoffgebundenen Erzeugnisses herstellbar ist, indem der erfindungsgemäße Versatz durch ionisierende Bestrahlung bestrahlt wird.

Insoweit weist der Binder wenigstens einen Initiator auf, welcher durch ionisierende Bestrahlung eine Härtungsreaktion des Harzes initiiert.

Der Binder des erfindungsgemäßen Versatzes, insbesondere beispielsweise ein auf Epoxidharz oder Acrylatharz basierender Binder des erfindungsgemäßen Versatzes, muss daher nicht mit organischen Lösungsmitteln, die gesundheitsgefährdende Substanzen aufweisen könnten, angemacht werden. Ferner ist der erfindungsgemäße Versatz besonders einfach zu handhaben. So kann die Polymerisation des Harzes des Binders und damit die Härtung des Versatzes zu einem Grünkörper zu einem gewünschten Zeitpunkt ganz einfach dadurch initiiert werden, dass der erfindungsgemäße Versatz einer solchen ionisierenden Strahlung unterworfen wird, dass der Initiator eine Härtungsreaktion des Harzes initiiert.

Erfindungsgemäß wurde festgestellt, dass es bei der Aushärtung des Binders des erfindungsgemäßen Versatzes aufgrund der dabei herrschenden Temperaturen, die geringer sind als bei den gemäß dem Stand der Technik verwendeten Bindern, zu wesentlich geringeren Spannungen im Grünkörper kommt als in solchen Grünkörpern, die gemäß dem Stand der Technik hergestellt werden. Insoweit wurde festgestellt, dass die aus Grünkörpern, die durch einen erfindungsgemäßen Versatz hergestellt sind, hergestellten feuerfesten kohlenstoffgebundenen Erzeugnisse bessere feuerfeste Eigenschaften als solche Erzeugnisse aufweisen, die aus Grünkörpern gemäß dem Stand der Technik hergestellt sind. Insbesondere die Festigkeit von Erzeugnissen, die auf Basis eines erfindungsgemäßen Versatzes hergestellt sind, ist in der Regel besser als die Festigkeit von Erzeugnissen, die durch Versätze nach dem Stand der Technik hergestellt sind.

Ferner wurde erfindungsgemäß festgestellt, dass die Aushärtung des Binders durch die Polymerisation des Harzes, insbesondere eines Epoxidharzes oder eines Acrylatharzes, wesentlich schneller voranschreitet als die Vernetzung in Bindern, die gemäß dem Stand der Technik für gattungsgemäße Versätze verwendet werden. Dies ist insbesondere unter prozesstechnischen Gesichtspunkten sehr vorteilhaft.

WO 2007/111607 A1 offenbart eine strahlungshärtbare Klebe-/Versiegelungsmischung, welche ein strahlungshärtbares Barriere-Gummi-Harz, einen strahlungshärtbaren Harzverdünner und ein photoinitiierendes System, welches einen oder mehrere Photoinitiatoren und optional ein oder mehrere Photosentizierer, umfasst. WO 97/05172 A1 beschreibt eine zäh gemachte Epoxidharzsystem-Mischungs-Zusammensetzung, welche ein Epoxidharz, einen kationischen Initiator sowie eine zähmachende Substanz umfasst, wobei die Zusammensetzung ferner Karbon, Graphit, Glas, Aramid, Polyethylen, Ton, Mineralien, Glaspartikel, Silikapartikel, Aluminapartikel, Aluminiumpulver oder Mischungen daraus umfassen kann. Die Veröffentlichung S. Alessi et al.: "Ionizing radiation induced curing of epoxy resin for advanced composite matrices" (Nuclear Instruments and Methods in Physics Research B 236 (2005) 23. Mai 2005, Seiten 55-60) beschäftigt sich mit der Frage, inwieweit sich die Prozessbedingungen, insbesondere hinsichtlich der Konzentration des Photoinitiators und der Strahlungsdosis, auf die Aushärtung eines strahlungshärtenden Epoxidharzsystems auswirken. EP 2 537 873 A1 offenbart verschiedene Metallverbindungen als Initiatoren für Epoxidharzsysteme. Vincent J. Lopata et. al: "Electron-beam-curable epoxy resins for the manufacture of high-perfomance composites" (Radiation Physics and Chemistry, Bd. 56, 01. Januar 1999, Seiten 405-415, Canada) beschreiben verschiedene strahlungshärtbare Epoxidharzsysteme.

Der erfindungsgemäße Versatz kann grundsätzlich zur Herstellung eines beliebigen feuerfesten kohlenstoffgebundenen Erzeugnisses verwendet werden. Insofern kann der erfindungsgemäße Versatz einen oder mehrere feuerfeste Grundstoffe umfassen, die gemäß dem Stand der Technik in Versätzen zur Herstellung von feuerfesten kohlenstoffgebundenen Erzeugnissen vorhanden sind. Insoweit kann der Versatz beispielsweise einen oder mehrere natürliche oder synthetische Rohstoffe, die gemäß dem Stand der Technik zur Herstellung von feuerfesten kohlenstoffgebundenen Erzeugnissen verwendet werden, umfassen, insbesondere beispielsweise einen oder mehrere Rohstoffe auf Basis eines oder mehrerer der folgenden Oxide: MgO, Al₂O₃, SiO₂ oder ZrO₂. Insoweit kann der wenigstens eine feuerfeste Grundstoff beispielsweise aus einem oder mehreren der folgenden Rohstoffe gebildet sein: Sintermagnesia, Schmelzmagnesia, Sinterkorund, Schmelzkorund, Bauxit, Spinell, calcinierte Tonerde, Quarz oder Zirkon.

Der erfindungsgemäße Versatz kann einen Anteil an feuerfestem Grundstoff beispielsweise im Bereich von 60 bis 98 Masse-% aufweisen, also beispielsweise auch einen Anteil an feuerfesten Grundstoff von wenigstens 62, 64, 66, 68, 70, 72, 74, 76, 78 oder 80 Masse-% und beispielsweise auch einen Anteil an feuerfesten Grundstoff von höchstens 97, 96 oder 95 Masse-%.

Soweit im Einzelfall nicht anders angegeben, sind alle hierin gemachten Angaben in Masse-% jeweils bezogen auf die Masse der jeweiligen Komponente in Bezug auf die Gesamtmasse des erfindungsgemäßen Versatzes.

Soweit der erfindungsgemäße Versatz zur Herstellung eines Grünkörpers zur Herstellung eines feuerfesten kohlenstoffgebundenen Erzeugnisses in Form eines Magnesiakohlenstofferzeugnisses dient, kann der wenigstens eine feuerfeste Grundstoff beispielsweise aus einem oder mehreren der folgenden Rohstoffe gebildet sein: Schmelzmagnesia oder Sintermagnesia.

Soweit der erfindungsgemäße Versatz zur Herstellung eines Grünkörpers zur Herstellung eines feuerfesten kohlenstoffgebundenen Erzeugnisses in Form eines Alumina-Magnesia-Kohlenstofferzeugnisses dient, kann der wenigstens eine feuerfeste Grundstoff beispielsweise gebildet sein aus einem oder mehreren der folgenden Rohstoffe: Schmelzmagnesia, Sintermagnesia, Schmelzkorund, Sinterkorund, Bauxit, Spinell oder calcinierte Tonerde.

Bei dem wenigstens einen Kohlenstoffträger kann es sich um einen oder mehrere Kohlenstoffträger handeln, die in Versätzen zur Herstellung eines feuerfesten kohlenstoffgebundenen Erzeugnisses gemäß dem Stand der Technik regelmäßig eingesetzt werden, also beispielsweise um wenigstens einen der folgenden Rohstoffe: Graphit oder Ruß.

Kohlenstoffträger kann der erfindungsgemäße Versatz beispielsweise in einem Anteil im Bereich von 1 bis 30 Masse-% aufweisen, also beispielsweise auch in einem Anteil von wenigstens 2, 3, 4 oder 5 Masse-% und beispielsweise in auch in einem Anteil von höchstens 28, 26, 24, 22, 20, 19, 18, 17, 16 oder 15 Masse-%.

Erfindungsgemäß umfasst der erfindungsgemäße Versatz wenigstens einen Binder, der ein Harz sowie wenigstens einen Initiator umfasst, wobei der Initiator ein solcher ist, der durch ionisierende Bestrahlung eine Härtungsreaktion des Harzes initiiert.

Das Harz des Binders können radikalisch härtbare Harze, wie beispielsweise Acrylatharze, oder ionisch härtbare Harze, wie beispielsweise Vinyletherharze oder Epoxidharze, sein.

Soweit radikalisch härtbare Harze vorgesehen sind, ist als Initiator bevorzugt ein solcher vorgesehen, der durch ionisierende Bestrahlung Radikale generiert, und hierdurch die Härtungsreaktion des Harzes initiiert. Dabei wird durch die freigesetzten Radikale eine solche Kettenreaktion des Harzes in Gang setzt, dass dieses polymerisiert und dabei aushärtet.

Soweit ionisch härtbare Harze vorgesehen sind, ist als Initiator bevorzugt ein solcher vorgesehen, der durch ionisierende Bestrahlung Protonen freisetzt, und hierdurch die Härtungsreaktion des Harzes initiiert. Dabei wird durch die freigesetzten Protonen eine solche Kettenreaktion des Harzes in Gang setzt, dass dieses polymerisiert und dabei aushärtet.

Erfindungsgemäß kann auch vorgesehen sein, dass der Binder unterschiedliche Harze oder Initiatoren umfasst, wobei wenigstens ein solches Harz und wenigstens ein solcher Initiator vorliegen, bei denen durch ionisierende Bestrahlung des Initiators eine Härtungsreaktion des Harzes initiiert wird.

Der erfindungsgemäße Versatz kann einen Binder beispielsweise in einem Anteil im Bereich von 0,5 bis 10 Masse-% aufweisen, also beispielsweise auch in einem Anteil von wenigstens 0,6 Masse-%, 0,7 Masse-%, 0,8 Masse-%, 0,9 oder 1 Masse-% und beispielsweise auch in einem Anteil von höchstens 9, 8, 7, 6 oder 5 Masse-%. Bevorzugt ist der Binder ausschließlich aus erfindungsgemäßen Harzen und Initiatoren zusammengesetzt.

Das Harz, das der Binder umfasst, weist für die Polymerisation geeignete Endgruppen auf, wie zum Beispiel Epoxid- oder Vinylether-Endgruppen. Soweit als Harz ein Epoxidharz vorliegt, weist dieses kationisch polymerisierbare Epoxidgruppen auf. Durch Beaufschlagung eines geeigneten Initiators, welcher bei Beaufschlagung mit ionisierender Strahlung H+-Ionen beziehungsweise Protonen freisetzt, mit ionisierender Strahlung kann daher ein kationisch polymerisierbares Harz, wie Epoxidharz, zur Härtung gebracht werden. Die Epoxidgruppen werden dadurch initiiert, und es kommt im weiteren zu einer Kettenwachstumsreaktion (Propagation), wobei die Epoxidgruppen des Epoxidharzes mit sich selbst reagieren, bis dieser Härtungsvorgang durch voranschreitende Vitrifikation gestoppt wird. Diese kationische Polymerisation beziehungsweise Kettenreaktion, die auch ohne das weitere Einwirken äußerer Anregungen, insbesondere auch ohne weitere ionisierende Bestrahlung, voranschreitet, wird im Stand der Technik auch als "dunkle Aushärtung" ("dark cure)" bezeichnet.

Bei dem Harz des Binders in Form eines Epoxidharzes kann es sich grundsätzlich um ein beliebiges Epoxidharz oder um ein mit Epoxidgruppen funktionalisiertes Harz handeln, welches kationisch polymerisierbare Epoxidgruppen enthält. Besonders bevorzugt handelt es sich bei dem Epoxidharz um ein Epoxid-Novolak. Insbesondere kann ein Epoxidharz vorgesehen sein, welches wenigstens eine der folgenden Eigenschaften aufweist:
- wenigstens zwei Epoxidgruppen;
- aromatische Ringe;
- niedrige Molmasse.
Der Vorteil der wenigstens zwei Epoxidgruppen oder der aromatischen Ringe liegt insbesondere in einer schnellen Aushärtung des Harzes. Der Vorteil der niedrigen Molmasse liegt darin, dass der Binder flüssig vorliegen kann.

Dem Epoxidharz können auch sogenannte Reaktiv-Verdünner ("reactive diluents"), welche die Viskosität des Epoxidharzes absenken und bei der Härtung an der Polymerisation beziehungsweise Aushärtungsreaktion teilnehmen, zugesetzt sein.

Aus dem Stand der Technik ist es bereits bekannt, ein kationisch polymerisierbares Epoxidharz in Kombination mit einem Photoinitiator zu konfektionieren und die Aushärtung des Epoxidharzes dadurch zu initiieren, dass der Photoinitiator mit ionisierender Bestrahlung beaufschlagt wird. Ausgehend von dieser Grundüberlegung liegt auch im Binder des erfindungsgemäßen Versatzes ein Epoxidharz neben einem solchen Photoinitiator vor, welcher durch ionisierende Bestrahlung Protonen freisetzt, um bei Einwirkung mit ionisierender Bestrahlung eine Polymerisation des Epoxidharzes zu initiieren.

Soweit als Initiator ein solcher Initiator vorgesehen ist, welcher durch ionisierende Bestrahlung Protonen freisetzt, handelt es sich bei dem Initiator um einen kationischen Initiator, der durch ionisierende Strahlung Protonen beziehungsweise H⁺-Ionen freisetzt. Insoweit handelt es sich bei dem Initiator insbesondere um einen Photoinitiator, insbesondere einen kationischen Photoinitiator. Besonders bevorzugt handelt es sich bei dem Initiator des Binders des erfindungsgemäßen Versatzes, der durch ionisierende Bestrahlung Protonen freisetzt, um wenigstens ein Onium-Salz, beispielsweise um wenigstens eines der folgenden Onium-Salze: Oxonium-Salz, Sulfonium-Salz, Diaconium-Salz, Phosphonium-Salz, Arsonium-Salz, Ammonium-Salz oder ein Halonium-Salz, wie beispielsweise Bromonium-Salz oder Iodonium-Salz. Dabei sind jeweils solche dieser Salze ausgewählt, die bei Bestrahlung mit ionisierender Strahlung Protonen beziehungsweise H⁺-Ionen freisetzen.

Soweit in dem Binder ein Inititator in Form eines Onium-Salzes vorliegt, ist das Anion grundsätzlich frei wählbar, wobei dieses Anion beispielsweise aus der Gruppe, bestehend aus Hexafluorantimonat (SbF₆⁻), Pentafluorphenylborat (B[C₆F₅]₄⁻), Hexafluorarsenat (AsF₆⁻), Hexafluorphosphat (PF₆⁻), Tetrafluoroborat (BF₄⁻), Trifluormethansulfonat (CF₃SO₃⁻) oder [3,5-bis-(Trifluormethyl)phenyl]borat (B[C₆H₃(CF₃)₂]₄⁻ und Mischungen daraus ausgewählt sein kann.

Besonders bevorzugt kann als Initiator ein Onium-Salz vorliegen, das aus der folgenden Gruppe ausgewählt ist: Diaryliodonium-Salz oder Triarylsulfonium-Salz. Besonders bevorzugt können diese Salze ein Anion in Form von Hexafluorantimonat aufweisen.

In dem Binder kann der Initiator, insbesondere soweit dieser in Form der hierin offenbarten Onium-Salze vorliegt, beispielsweise in einem Anteil von 0,1 bis 30 Masse-% vorliegen, bezogen auf die Gesamtmasse des Binders, also beispielsweise auch in einem Anteil von wenigstens 0,5 Masse-%, 1 Masse-%, 2 Masse-%, 3 Masse-%, 4 Masse-% oder 5 Masse-% und beispielsweise auch in einem Anteil von höchstens 28, 26, 24 oder 20 Masse-%. Die verbleibenden Massenanteile des Binders werden jeweils von dem erfindungsgemäßen Harz, insbesondere einem Epoxidharz eingenommen.

Soweit der Binder radikalisch härtbare Harze umfasst, ist als Initiator ein solcher vorgesehen, der durch ionisierende Bestrahlung freie Radikale generiert, und hierdurch die Härtungsreaktion des Harzes initiiert. Dabei wird durch die generierten Radikale eine solche radikalische Kettenpolymerisation des Harzes in Gang setzt, dass dieses polymerisiert und dabei aushärtet.

Soweit in dem Binder des erfindungsgemäßen Versatzes "radikalisch härtbare Harze" vorgesehen sind, werden hierunter erfindungsgemäß die Monomere oder Oligomere verstanden, die durch Homopolymerisation oder Copolymerisation derart zur Reaktion gebracht werden können, dass diese durch radikalische Kettenpolymerisation das betreffende Harz bilden.

Als radikalisch härtbares Harz kann der Binder beispielsweise eines oder mehrere der folgenden Harze aufweisen: Acrylatharz, Vinylesterharz, Alkydharz, Polyesterharz, Methacrylatharz und funktionalisiertes Siliconharz. Insoweit kann der Binder die Monomere oder Oligomere aufweisen, die zu diesen Harzen vernetzbar beziehungsweise aushärtbar sind. Insoweit kann auf die hierfür aus dem Stand der Technik bekannten Monomere oder Oligomere zurückgegriffen werden.

Besonders bevorzugt liegt das radikalisch härtbare Harz als Acrylatharz vor.

Beispielsweise kann der Binder zur Polymerisation von Acrylatharz wenigstens eines der Monomere: Acrylsäure, Methaycrylsäure oder deren Ester aufweisen. Ferner kann der Binder beispielsweise wenigstens eines der folgenden Monomere enthalten: Styrol, Butadien oder Acrylnitril. Der Binder kann auch mehrfunktionelle Verbindungen enthalten, beispielsweise Hexandiol-Diacrylat, Pentaerythrol-Tetraacrylat, Pentaerythrol-Triacrylat oder Trimethylolpropan-Triacrylat. Solche mehrfunktionellen Verbindungen können den Binder selbst darstellen, oder auch zum Beispiel einem Acrylatharz als Reaktivverdünner ("reactive diluent") zugefügt sein.

Soweit als Initiator ein solcher Initiator vorgesehen ist, welcher durch ionisierende Bestrahlung freie Radikale freisetzt, handelt es sich bei dem Initiator um einen radikalischen Initiator beziehungsweise einen Radikalstarter. Insoweit handelt es sich bei dem Initiator insbesondere um einen radikalischen Photoinitiator. Beispielsweise kann der radikalische Initiator des Binders des erfindungsgemäßen Versatzes, der durch ionisierende Bestrahlung freie Radikale generiert, aus der folgenden Gruppe augewählt sein: aromatisch-aliphatische Ketone, vollaromatische Ketone, substituierte Phoshinoxide, Peroxo-Berbindungen und Diazoverbindungen.

Besonders bevorzugt kann der radikalische Initiator des Binders des erfindungsgemäßen Versatzes aus der folgenden Gruppe augewählt sein: 2-Hydroxy-2-methyl-1-phenylpropanon, 2-Methyl-1-[4-(methylthio)phenyl]-2-morpholinopropan-1-on, Benzophenon, Ethyl (2,4,6-trimethylbenzoyl) phenylphosphinat, 2,4,6-Trimethylbenzoyl-Diphenylphosphinoxid, Dibenzoylperoxid und Azo-bis-(isobutyronitril).

In dem Binder kann der radikalische Initiator beispielsweise in einem Anteil von 0,1 bis 30 Masse-% vorliegen, bezogen auf die Gesamtmasse des Binders, also beispielsweise auch in einem Anteil von wenigstens 0,5 Masse-%, 1 Masse-%, 2 Masse-%, 3 Masse-%, 4 Masse-% oder 5 Masse-% und beispielsweise auch in einem Anteil von höchstens 28, 26, 24 oder 20 Masse-%. Die verbleibenden Massenanteile des Binders werden jeweils von dem erfindungsgemäßen Harz, beispielsweise einem Acrylatharz, eingenommen.

Als weitere Komponenten kann der erfindungsgemäße Versatz eines oder mehrere Antioxidantien aufweisen, insbesondere Antioxidantien, die Versätze zur Herstellung von feuerfesten kohlenstoffgebundenen Erzeugnissen nach dem Stand der Technik aufweisen können, also beispielsweise eines oder mehrere der folgenden Antioxidantien: Aluminiumpulver, Siliciumpulver, Pulver aus Aluminium-Magnesium-Legierungen, Carbide oder Boride.

Entsprechende Antioxidantien weist der erfindungsgemäße Versatz beispielsweise in einem Anteil unter 2 Masse-%, also beispielsweise auch in einem Anteil unter 1 Masse-% auf. Beispielsweise kann der Versatz Antioxidantien in einem Anteil von wenigstens 0,1 Masse-%, also beispielsweise auch in einem Anteil von wenigstens 0,5 Masse-% aufweisen.

Erfindungsgemäß hat sich herausgestellt, dass die Polymerisationskettenreaktion des Harzes, insbesondere soweit dies in Form eines Epoxidharzes oder Acrylatharzes vorliegt, sehr sensibel auf weitere Komponenten reagieren kann, so dass die Polymerisation des Harzes durch weitere Komponenten, die neben den erfindungsgemäß vorgesehenen Komponenten im Versatz vorliegen, gegebenenfalls unterdrückt werden kann. Insofern kann erfindungsgemäß vorgesehen sein, dass der erfindungsgemäße Versatz neben den hierin offenbarten Komponenten, also neben wenigstens einem feuerfesten Grundstoff, wenigstens einem Kohlenstoffträger, wenigstens einem Binder sowie wenigstens einem Antioxidans weitere Komponenten in einem Anteil unter 10 Masse-% aufweist, insbesondere in einem Anteil unter 9, 8, 7, 6, 5, 4, 3, 2 oder 1 Masse-%.

Insbesondere hat sich herausgestellt, dass der Versatz sehr sensibel auf die Gegenwart von thermoplastischen Kunststoffen, Elastomeren und Weichmachern, die neben dem Harz im Versatz vorliegen, reagiert. Insoweit kann vorgesehen sein, dass die Gesamtmasse aus Thermoplasten, Elastomeren und Weichmachern, die im Versatz vorliegen, unter 3 Masse-% liegt, insbesondere unter 2, 1 oder 0,5 Masse-%.

Gegenstand der Erfindung ist auch ein Verfahren zur Herstellung eines Grünkörpers zur Herstellung eines feuerfesten kohlenstoffgebundenen Erzeugnisses, welches die folgenden Schritte umfasst:
Zur Verfügungstellung des hierin beschriebenen, erfindungsgemäßen Versatzes;
Aussetzen des Versatzes einer solchen ionisierenden Strahlung, dass der Initiator eine Härtungsreaktion des Harzes initiiert, also insbesondere der Initiator Protonen oder Radikale freisetzt, durch welche das Harz kationisch oder radikalisch aushärtet.

Besonders bevorzugt wird der Versatz einer ionisierenden Strahlung in Form von Röntgenstrahlung oder Gammastrahlung ausgesetzt. Überraschend wurde erfindungsgemäß festgestellt, dass die Initiierung der Polymerisation des Harzes, insbesondere eines Epoxidharzes oder Acrylatharzes besonders einfach und zuverlässig dadurch hervorgerufen werden kann, dass der Versatz Röntgenstrahlung oder Gammastrahlung ausgesetzt wird. Eine solche Röntgenstrahlung oder Gammastrahlung zur Initiierung der Polymerisation des Harzes hat insbesondere auch den Vorteil, dass Röntgenstrahlung heutzutage verhältnismäßig einfach zu handhaben ist und daher auch im industriellen Maßstab zur Härtung des erfindungsgemäßen Versatzes verwendbar ist. Insoweit wurde erfindungsgemäß festgestellt, dass durch Röntgenstrahlung oder Gammastrahlung eine Polymerisation des Harzes sehr einfach und schnell durchführbar ist.

Die Beaufschlagung des Versatzes mit Röntgenstrahlung oder Gammastrahlung kann beispielsweise in einer geschlossenen Strahlungskammer erfolgen, so dass die Umgebung nicht mit Röntgenstrahlung oder Gammastrahlung beaufschlagt wird.

Erfindungsgemäß wurde festgestellt, dass der Versatz zur Aushärtung des Binders insbesondere einer Strahlungsdosis im Bereich von 1 bis 100 kGy auszusetzen ist und besonders bevorzugt einer Strahlungsdosis im Bereich von 7 bis 40 kGy, also beispielsweise auch einer Strahlungsdosis von wenigstens 15 kGy und beispielsweise auch einer Strahlungsdosis von höchstens 22 kGy. Bei einer Bestrahlung des Versatzes mit einer solchen Strahlungsdosis wird eine Initiierung der Polymerisation des kationisch beziehungsweise radikalisch polymerisierbaren Harzes zuverlässig initiiert und eine im wesentlichen vollständige Aushärtung des Harzes ist gewährleistet.

Bevorzugt wird der Versatz mit einer Strahlungsleistung im Bereich von 1 bis 7 kGy pro Minute beaufschlagt. Die Dosisrate ist dabei grundsätzlich beliebig, kann jedoch bevorzugt bei wenigstens 0,1 kGy/min liegen.

Insofern wird der Versatz einer Röntgenstrahlung mit einer solchen Strahlungsleistung, um die vorbezeichnete, bevorzugte Strahlungsdosis in den Versatz einzutragen, beispielsweise für einen Zeitraum im Bereich von 20 s bis 60 min ausgesetzt, bevorzugt für einen Zeitraum im Bereich von 2 bis 30 min oder 3 bis 20 min.

Nach einer Ausführungsform kann vorgesehen sein, dass sich an den Schritt der Polymerisation durch Aussetzen des Versatzes einer ionisierenden Strahlung ein Nachbehandlungsschritt anschließt. Insoweit kann beispielsweise vorgesehen sein, dass der Versatz nach einer vollständigen Polymerisation des Harzes mit Temperatur beaufschlagt wird. Denn erfindungsgemäß wurde festgestellt, dass durch eine solche Temperaturbeaufschlagung eines Versatzes, die sich an den Schritt der Polymerisation beziehungsweise Härtung des Harzes anschließt, eine Steigerung der Festigkeit des Grünkörpers erreichbar ist. Insoweit kann beispielsweise vorgesehen sein, dass der Versatz nach seiner Beaufschlagung mit ionisierender Strahlung mit einer Temperatur im Bereich von 50 bis 200°C beaufschlagt wird, also beispielsweise auch mit einer Temperatur von wenigstens 60, 70 oder 80°C und beispielsweise auch mit einer Temperatur von höchstens 180, 160, 140, 120 oder 110°C. Beispielsweise kann der Versatz mit einer Temperatur von etwa 90°C beaufschlagt werden.

Beispielsweise kann der Versatz in einem Ofen mit einer solchen Temperatur beaufschlagt werden.

Gegenstand der Erfindung ist auch ein Grünkörper zur Herstellung eines feuerfesten kohlenstoffgebundenen Erzeugnisses, welcher durch das erfindungsgemäße Verfahren hergestellt ist.

Unter einem Grünkörper wird hierin, gemäß dem Stand der Technik, der erfindungsgemäße Versatz bezeichnet, der durch den ausgehärteten Binder verfestigt ist, jedoch noch keine Kohlenstoffbindung aufweist. Zur Ausbildung einer solchen Kohlenstoffbindung wird der Grünkörper einer anschließenden Temperaturbehandlung unterworfen, insbesondere beim bestimmungsgemäßen Einsatz des Grünkörpers beziehungsweise des daraus gebildeten feuerfesten kohlenstoffgebundenen Erzeugnisses.

Ausführungsbeispiele der Erfindung werden anhand der nachfolgenden Ausführungsbeispiele näher erläutert.

Sämtliche Merkmale der Erfindung können, einzeln oder in Kombination, beliebig miteinander kombiniert sein.

### Beispiel 1:

Der erfindungsgemäße Versatz gemäß Ausführungsbeispiel 1 enthält die Komponenten in den Massenanteilen gemäß der nachfolgenden Tabelle 1.

**Tabelle 1**

| **Komponente** | **Anteil [Masse-%]** |
|---|---|
| Schmelzmagnesia | 88,5 |
| Graphit | 8,5 |
| Binder | 3,0 |

Gemäß Ausführungsbeispiel 1 lag ein feuerfester Grundstoff in Form von Schmelzmagnesia vor. Die Korngröße der Schmelzmagnesia lag im Bereich von größer 0 bis 5 mm. Die Schmelzmagnesia wies einen Anteil an MgO von 98 Masse-% und 2 % Nebenphasen auf, insbesondere in Form von CaO, SiO₂, Al₂O₃ und Fe₂O₃.

Der Kohlenstoffträger des Versatzes gemäß Ausführungsbeispiel 1 lag in Form von Graphit mit einem Anteil an Kohlenstoff von 94 Masse-% vor.

Der Binder wies einen Anteil an Harz in Form Epoxy-Novolak von 85 Masse-% und einen Anteil an einem Initiator in Form von Triarylsulfonium-Hexafluorantimon-Salz von 15 Masse-%, jeweils bezogen auf die Gesamtmasse des Binders, auf.

Der entsprechend konfektionierte Versatz wurde für 10 Minuten bei einer Temperatur von 50°C gemischt. Anschließend ließ man den gemischten Versatz ruhen.

Der Versatz wurde anschließend durch Pressen zu einem Formkörper geformt und dieser Formkörper anschließend mit Röntgenstrahlung mit einer Strahlungsdosis von 3,6 kGy beaufschlagt. Durch die Röntgenstrahlung setzte das Triarylsulfonium-Hexafluorantimon-Salz Protonen frei, die eine Kettenreaktion des Epoxy-Novolaks initiierten, wobei die Epoxidgruppen des Epoxy-Novolaks miteinander polymerisierten, bis der Epoxy-Novolak vollständig ausgehärtet war.

Anschließend erhielt man einen Grünkörper zur Herstellung eines feuerfesten kohlenstoffgebundenen Erzeugnisses.

Dieser Grünkörper wurde im Rahmen eines Nachbehandlungsschrittes mit einer Temperatur von 90°C beaufschlagt, wodurch die Festigkeitswerte des Grünkörpers verbessert wurden.

### Beispiel 2:

Der Versatz entspricht Ausführungsbeispiel 1 mit dem einzigen Unterschied, dass der Binder einen Anteil an Harz in Form Acrylatharz, nämlich Pentaerythritoltriacrylate (CAS Nummer 3524-68-3) von 85 Masse-% und einen Anteil an einem Initiator in Form von Ethyl-(2,4,6-trimethylbenzoyl)phenylphosphinat von 15 Masse-% aufwies, jeweils bezogen auf die Gesamtmasse des Binders, auf.

Der entsprechend konfektionierte Versatz wurde für 10 Minuten bei einer Temperatur von 50°C gemischt. Anschließend ließ man den gemischten Versatz ruhen.

Der Versatz wurde anschließend durch Pressen zu einem Formkörper geformt und dieser Formkörper anschließend mit Röntgenstrahlung mit einer Strahlungsdosis von 3,6 kGy beaufschlagt. Durch die Röntgenstrahlung generierte das Ethyl-(2,4,6-trimethylbenzoyl)phenylphosphinat Radikale, die eine Kettenreaktion des Acrylatharzes initiierten, so dass dieses polymerisierte und dabei vollständig aushärtete.

Anschließend erhielt man einen Grünkörper zur Herstellung eines feuerfesten kohlenstoffgebundenen Erzeugnisses.

Dieser Grünkörper wurde im Rahmen eines Nachbehandlungsschrittes mit einer Temperatur von 90°C beaufschlagt, wodurch die Festigkeitswerte des Grünkörpers verbessert wurden.

## Patentansprüche

1. Versatz zur Herstellung eines Grünkörpers zur Herstellung eines feuerfesten kohlenstoffgebundenen Erzeugnisses, welcher die folgenden Komponenten umfasst:
1.1 Wenigstens einen feuerfesten Grundstoff,
1.2 wenigstens einen Kohlenstoffträger, sowie
1.3 wenigstens einen Binder, der
1.3.1 ein Harz sowie
1.3.2 wenigstens einen Initiator, welcher durch ionisierende Strahlung eine Härtungsreaktion des Harzes initiiert,
umfasst.

2. Versatz nach Anspruch 1 mit einem Anteil an feuerfestem Grundstoff im Bereich von 60 bis 98 Masse-%.

3. Versatz nach wenigstens einem der vorhergehenden Ansprüche mit einem Anteil an Binder im Bereich von 0,5 bis 10 Masse-%.

4. Versatz nach wenigstens einem der vorhergehenden Ansprüche mit einem Binder aus einem ionisch härtbaren Harze und einem kationischen Photoinitiator.

5. Versatz nach wenigstens einem der vorhergehenden Ansprüche mit einem ionisch härtbaren Harz in Form eines Epoxidharzes.

6. Versatz nach wenigstens einem der vorhergehenden Ansprüche mit einem kationischen Photoinitiator in Form eines Oniumsalzes.

7. Versatz nach wenigstens einem der vorhergehenden Ansprüche mit einem Binder aus einem radikalisch härtbaren Harze und einem radikalischen Photoinitiator.

8. Versatz nach wenigstens einem der vorhergehenden Ansprüche mit einem radikalisch härtbaren Harz in Form von Acrylatharz.

9. Versatz nach wenigstens einem der vorhergehenden Ansprüche mit einem radikalischen Photoinitiator ausgewählt aus der Gruppe: Benzophenon, aromatische Phosphanoxide, Phosphonate, Peroxide oder Azoverbindungen.

10. Verfahren zur Herstellung eines Grünkörpers zur Herstellung eines feuerfesten kohlenstoffgebundenen Erzeugnisses, welches die folgenden Schritte umfasst:
10.1 zur Verfügungstellung eines Versatzes nach wenigstens einem der vorhergehenden Ansprüche;
10.2 Aussetzen des Versatzes einer solchen ionisierenden Strahlung, dass der Initiator eine Härtungsreaktion des Harzes initiiert.

11. Verfahren nach Anspruch 10, wobei der Versatz Röntgenstrahlung oder Gammastrahlung ausgesetzt wird.

12. Verfahren nach Anspruch 11, wobei der Versatz einer Strahlungsdosis im Bereich von 1 bis 100 kGy ausgesetzt wird.

13. Grünkörper zur Herstellung eines feuerfesten kohlenstoffgebundenen Erzeugnisses, welcher durch ein Verfahren nach wenigstens einem der Ansprüche 10 bis 12 hergestellt ist.

## Claims

1. A composition for preparing a green body for the manufacture of a refractory carbon-bonded product, comprising the following components:
1.1 at least one refractory raw material,
1.2 at least one carbon carrier, and
1.3 at least one binder which comprises
1.3.1a resin and
1.3.2 at least one initiator which initiates a curing reaction of the resin through ionizing radiation.

2. The composition according to claim 1 having a proportion of refractory base material in the range of 60 to 98 % by mass.

3. The composition according to at least one of the preceding claims in which the percentage of binder is in the range from 0.5 to 10 % by mass.

4. The composition according to at least one of the preceding claims having a binder consisting of an ionically curable resin and a cationic photoinitiator.

5. The composition according to at least one of the preceding claims having an ionically curable resin in the form of an epoxy resin.

6. The composition according to at least one of the preceding claims having a cationic photoinitiator in the form of an onium salt.

7. The composition according to at least one of the preceding claims with a binder consisting of a radically curable resin and a free radical photoinitiator.

8. The composition according to at least one of the preceding claims with a radically curable resin in the form of acrylate resin.

9. The composition according to at least one of the preceding claims having a free radical photoinitiator selected from the group: benzophenone, aromatic phosphine oxides, phosphonates, peroxides or azo-compounds.

10. A method for preparing a green body for the manufacture of a refractory carbon-bonded product, comprising the following steps:
10.1 providing a composition according to at least one of the preceding claims,
10.2 exposing the composition to such an ionizing radiation that the initiator initiates a curing reaction of the resin.

11. The method according to claim 10, wherein the composition is exposed to X-rays or gamma radiation.

12. The method according to claim 11, wherein the composition is exposed to a radiation dose in the range from 1 to 100 kGy.

13. A green body for preparing a refractory carbon-bonded product which is produced by a method according to at least one of claims 10 to 12.

## Revendications

1. Composition destinée à produire un corps cru pour la fabrication d'un produit réfractaire à liaison carbone, lequel comprend les composants suivants : 1.1 au moins une matière première réfractaire,
1.2 au moins un support de carbone, ainsi
1.3 qu'au moins un liant qui
1.3.1 comprend une résine, ainsi
1.3.2 qu'au moins un initiateur qui par rayonnement ionisant, initie une réaction de durcissement de la résine.

2. Composition selon la revendication 1, avec une part en matière première réfractaire dans l'ordre de 60 à 98 % en masse.

3. Composition selon au moins l'une quelconque des revendications précédentes, avec une part en liant dans l'ordre de 0,5 à 10 % en masse.

4. Composition selon au moins l'une quelconque des revendications précédentes, avec un liant en une résine durcissable par ionisation et un photo-initiateur cationique.

5. Composition selon au moins l'une quelconque des revendications précédentes, avec une résine durcissable par ionisation sous la forme d'une résine époxy.

6. Composition selon au moins l'une quelconque des revendications précédentes, avec un photo-initiateur cationique sous la forme d'un sel d'onium.

7. Composition selon au moins l'une quelconque des revendications précédentes, avec un liant en une résine durcissable par voie radicalaire et un photo-initiateur radicalaire.

8. Composition selon au moins l'une quelconque des revendications précédentes, avec une résine durcissable par voie radicalaire sous la forme de résine d'acrylate.

9. Composition selon au moins l'une quelconque des revendications précédentes, avec un photo-initiateur radicalaire choisi dans le groupe comprenant :
la benzophénone, des phosphanoxydes aromatiques, des phosphonates, des peroxydes ou des composés azo.

10. Procédé destiné à fabriquer un corps cru pour la fabrication d'un produit réfractaire à liaison carbone, lequel comprend les étapes suivantes :
10.1 de la mise à disposition d'une composition selon au moins l'une quelconque des revendications précédentes ;
10.2 de l'exposition de la composition à un rayonnement ionisant tel, que l'initiateur initie une réaction de durcissement de la résine.

11. Procédé selon la revendication 10, lors duquel on expose la composition à un rayonnement X ou à un rayonnement gamma.

12. Procédé selon la revendication 11, lors duquel on expose la composition à une dose de rayonnement dans l'ordre de 1 à 100 kGy.

13. Corps cru pour la fabrication d'un produit réfractaire à liaison carbone, lequel est fabriqué par un procédé selon au moins l'une quelconque des revendications 10 à 12.
